# EUROPEAN PATENT APPLICATION

(11) **EP 4 832 564 A1**
(43) Date of publication of application: **28.10.2026**
(21) Application number: 25741404.5
(22) Date of filing: 09.01.2025
(51) Int. Cl.: H04W 28/02, H04W 36/00

(54) **COMMUNICATION METHOD AND RELATED APPARATUS**

(30) Priority: 16.01.2024 CN 202410060856
(71) Applicant: Huawei Technologies Co., Ltd., Shenzhen, Guangdong 518129 (CN)
(72) Inventor: XU, Shengfeng, Shenzhen, Guangdong 518129 (CN)
(74) Representative: Huawei European IPR
(86) International application number: PCT/CN2025/071444
(87) International publication number: WO 2025/152842

(57) **Abstract**

This application provides a communication method and a related apparatus, which help reduce the impact on data transmission performance of a terminal caused by path switching. The method includes: receiving, by a terminal, ninth indication information, where the ninth indication information is used to indicate that the first session of the terminal has a transmission proxy function or the first session supports path switching. The terminal sends fifth indication information based on the ninth indication information, where the fifth indication information is used to indicate path switching of the first session of the terminal. When determining that the transmission proxy function is provided for the first session, the SMF sends the first indication information to the UPF based on the fifth indication information, where the first indication information is used to indicate to stop downlink data transmission of the first session. The UPF stops, based on the first indication information, sending downlink data of the first session to the first RAN node.

## Description

This application claims priority to Chinese Patent Application No. 202410060856.1, filed with the China National Intellectual Property Administration on January 16, 2024, and entitled "COMMUNICATION METHOD AND RELATED APPARATUS", which is incorporated herein by reference in its entirety.

### TECHNICAL FIELD

This application relates to the communication field, and in particular, to a communication method and a related apparatus.

### BACKGROUND

The service data of a protocol data unit (protocol data unit, PDU) session of a terminal may be transmitted over a transmission control protocol (transmission control protocol, TCP) connection between the terminal and the server. A user plane function (user plane function, UPF) on the network side has a routing function and can forward uplink and downlink data between the terminal and the server.

In a possible scenario, due to the movement of the terminal, the PDU session of the terminal performs path switching between different radio access network (radio access network, RAN) nodes. For example, the terminal first accesses RAN node 1, and transmits the service data of the PDU session through RAN node 1. After the terminal accesses RAN node 2, the terminal switches the PDU session from RAN node 1 to RAN node 2, and transmits the service data of the PDU session through RAN node 2.

During the process of path switching, for a scenario where the terminal has limited capability (for example, after the terminal accesses RAN node 2, it cannot continue to communicate with RAN node 1), the server continues to send the terminal's downlink data to the UPF, and the UPF continues to forward the downlink data to RAN node 1, from when the terminal connects to RAN node 2 until the path switching is completed. However, after the terminal accesses RAN node 2, the communication connection between the terminal and RAN node 1 has been interrupted. As a result, the terminal cannot receive from RAN node 1 the downlink data forwarded by the UPF, and thus the UPF cannot receive the terminal's acknowledgment (acknowledgement, ACK) feedback for the downlink data. Consequently, the UPF will erroneously assume that network congestion has occurred, and will then reduce the data transmission rate to alleviate the network congestion. This will, in turn, affect communication performance.

Accordingly, a communication method is urgently needed to reduce the impact of path switching on the data transmission performance of the terminal.

### SUMMARY

This application provides a communication method and a related apparatus, which help reduce the impact of path switching on the data transmission performance of a terminal.

According to a first aspect, a communication method is provided. The method may be performed by a first communication apparatus. The first communication apparatus may be a UPF, or may be a component (for example, a processor, a chip, or a chip system) configured in the UPF, or may be a logical module or software that can implement all or some functions of the first communication apparatus. This is not limited in this application.

The method includes: receiving first indication information from a session management function (session management function, SMF), where the first indication information is used to indicate to stop downlink data transmission of a first session of a terminal; and based on the first indication information, stopping sending downlink data of the first session to the first RAN node, where the first RAN node is a RAN node used to transmit data of the first session before path switching of the first session.

In this application, before path switching, the terminal transmits data of the first session with a UPF through the first RAN node. If the terminal is a terminal with limited capability, the terminal cannot simultaneously connect to a plurality of RAN nodes. For example, the terminal cannot simultaneously connect to the first RAN node and the second RAN node. Therefore, after the terminal accesses the second RAN node, the terminal no longer supports transmitting data with the first RAN node.

Based on the technical solutions of this application, the UPF provides a transmission proxy function for the first session. In other words, the UPF, as a transmission proxy, forwards data between the terminal and the server. The UPF temporarily stops sending downlink data of the first session to the first RAN node based on instructions of the SMF. In other words, the UPF temporarily stops sending downlink data of the first session to the terminal through the first RAN node. In this way, the UPF does not need to attempt to reduce a data transmission rate to send downlink data to the terminal, and therefore can avoid a loss of the downlink data of the first session, thereby helping reduce the impact of the path switching on data transmission performance of the terminal.

With reference to the first aspect, in some implementations of the first aspect, the method further includes: receiving second indication information from an SMF, where the second indication information is used to indicate to provide a transmission proxy function for the first session, and the transmission proxy is a TCP connection transmission proxy, or the transmission proxy is a quick user datagram protocol internet connection (quick user datagram protocol internet connection, QUIC) transmission proxy; based on the second indication information, providing the transmission proxy function for the first session.

With reference to the first aspect, in some implementations of the first aspect, stopping sending downlink data of the first session to the first RAN node includes: stopping sending downlink data of the first session to the first RAN node through the first communication connection, where the first communication connection is a TCP connection or a QUIC connection between the terminal and the UPF.

With reference to the first aspect, in some implementations of the first aspect, after stopping sending downlink data of the first session to the first RAN node through the first communication connection, the method further includes: receiving downlink data of the first session transmitted through the second communication connection; and buffering the downlink data of the first session transmitted through the second communication connection. The second communication connection is a TCP connection or a QUIC connection between the UPF and the server.

In this application, the UPF temporarily buffers the downlink data of the first session. This helps avoid the loss of the downlink data of the first session, thereby improving the service continuity of the first session.

With reference to the first aspect, in some implementations of the first aspect, the method further includes: receiving third indication information from the SMF, where the third indication information is used to indicate a first duration, and the first duration is a duration for buffering the downlink data of the first session.

With reference to the first aspect, in some implementations of the first aspect, after the method stops sending the downlink data of the first session to the first RAN node through the first communication connection, the method further includes: receiving fourth indication information from the SMF, where the fourth indication information is used to indicate that downlink data transmission of the first session starts; and based on the fourth indication information, sending the downlink data of the first session to the second RAN node through the first communication connection based on the stored communication connection parameters. The second RAN node is a RAN node used to transmit data of the first session after the path switching of the first session. The communication connection parameters are communication connection parameters used when the downlink data of the first session is stopped from being sent to the first RAN node through the first communication connection.

In this application, the downlink data of the first session is sent according to the stored communication connection parameters. This helps improve the data transmission efficiency of the UPF.

According to a second aspect, a communication method is provided. The method may be performed by a second communication apparatus. The second communication apparatus may be an SMF, or may be a component (for example, a processor, a chip, or a chip system) configured in the SMF, or may be a logical module or software that can implement all or some functions of the second communication apparatus. This is not limited in this application.

The method includes: receiving fifth indication information, where the fifth indication information is used to indicate path switching of a first session of a terminal; and when it is determined that the UPF provides a transmission proxy function for the first session, sending, based on the fifth indication information, first indication information to the UPF, where the first indication information is used to indicate to stop downlink data transmission of the first session, and the transmission proxy is a TCP connection transmission proxy, or the transmission proxy is a QUIC transmission proxy.

In this application, under the premise that the UPF provides the transmission proxy function for the first session, the terminal and the UPF transmit data through the first communication connection. The UPF and the server transmit data through the second communication connection. Therefore, the SMF may determine that the UPF provides the transmission proxy function for the first session, and then indicate the UPF to stop downlink data transmission of the first session, thereby reducing the impact on the data transmission performance of the terminal caused by path switching.

With reference to the second aspect, in some implementations of the second aspect, the method further includes: sending third indication information to the UPF, where the third indication information is used to indicate a first duration, and the first duration is the duration for buffering downlink data of the first session.

With reference to the second aspect, in some implementations of the second aspect, the method further includes: receiving sixth indication information, where the sixth indication information is used to indicate that the terminal does not support data transmission with the first RAN node during path switching of the first session, and the first RAN node is a RAN node used to transmit data of the first session before path switching of the first session.

With reference to the second aspect, in some implementations of the second aspect, based on the fifth indication information, sending the first indication information to the UPF includes: based on the fifth indication information and the sixth indication information, sending the first indication information to the UPF.

With reference to the second aspect, in some implementations of the second aspect, before receiving the fifth indication information, the method further includes: sending second indication information to the UPF, where the second indication information is used to indicate to provide a transmission proxy function for the first session.

With reference to the second aspect, in some implementations of the second aspect, sending the second indication information to the UPF includes: based on the sixth indication information, sending the second indication information to the UPF.

With reference to the second aspect, in some implementations of the second aspect, before sending the second indication information to the UPF, the method further includes: receiving seventh indication information, where the seventh indication information is used to indicate that the terminal supports path switching for the first session or the terminal supports path switching. Sending the second indication information to the UPF includes: based on the seventh indication information, sending the second indication information to the UPF.

With reference to the second aspect, in some implementations of the second aspect, before sending the second indication information to the UPF, the method further includes: receiving eighth indication information, where the eighth indication information is used to indicate that the first session supports service continuity during path switching. Sending the second indication information to the UPF includes: sending the second indication information to the UPF based on the eighth indication information.

With reference to the second aspect, in some implementations of the second aspect, after sending the second indication information to the UPF, the method further includes: sending the ninth indication information to the terminal, where the ninth indication information is used to indicate that the first session has the transmission proxy function or the first session supports path switching.

With reference to the second aspect, in some implementations of the second aspect, after sending the first indication information to the UPF, the method further includes: sending the fourth indication information to the UPF, where the fourth indication information is used to indicate that the downlink data transmission of the first session is to be started.

According to the third aspect, a communication method is provided. This method may be performed by a third communication apparatus. The third communication apparatus may be a terminal, or may be a component (for example, a processor, a chip, or a chip system) configured in the terminal, or may be a logical module or software that can implement all or some functions of the third communication apparatus. This is not limited in this application. The method includes: receiving ninth indication information, where the ninth indication information is used to indicate that the first session of the terminal has the transmission proxy function, or the first session supports path switching, and the transmission proxy is a TCP connection transmission proxy, or the transmission proxy is a QUIC transmission proxy. Based on the ninth indication information, fifth indication information is sent, where the fifth indication information is used to indicate path switching of the first session of the terminal.

In this application, after receiving the ninth indication information, the terminal determines that the first session of the terminal has the transmission proxy function, or determines that the first session supports path switching, that is, the first session supports service continuity during path switching. More specifically, the first session supports no data loss during path switching. Under this premise, when the terminal sends the fifth indication information to indicate to perform path switching, it is helpful to avoid loss of downlink data of the first session, thereby helping to reduce the impact on data transmission performance of the terminal caused by path switching.

With reference to the third aspect, in some implementations of the third aspect, the sending of the fifth indication information includes: sending the fifth indication information through the first RAN node, where the first RAN node is a RAN node used to transmit data of the first session before the path switching of the first session.

With reference to the third aspect, in some implementations of the third aspect, the sending of the fifth indication information includes: sending the fifth indication information through the second RAN node, where the second RAN node is a RAN node used to transmit data of the first session after the path switching of the first session.

With reference to the third aspect, in some implementations of the third aspect, the method further includes: sending sixth indication information, where the sixth indication information is used to indicate that the terminal does not support data transmission with the first RAN node during the path switching of the first session, and the first RAN node is a RAN node used to transmit data of the first session before the path switching of the first session.

With reference to the third aspect, in some implementations of the third aspect, before receiving the ninth indication information, the method further includes: sending seventh indication information, where the seventh indication information is used to indicate that the terminal supports path switching of the first session or that the terminal supports path switching.

It should be understood that the second aspect and the third aspect of this application correspond to the technical solutions in the first aspect of this application. The beneficial effects achieved by the aspects and the corresponding feasible implementations are similar, and details are not described again.

According to the fourth aspect, a communication apparatus is provided, including: a module configured to perform the method in any one of the possible implementations of any one of the foregoing aspects. Specifically, the apparatus includes a module configured to perform the method in any one of the possible implementations of any one of the foregoing aspects.

In a design, the apparatus may include a module corresponding to each method, operation, step, or action described in any one of the foregoing aspects. The module may be a hardware circuit, or may be software, or may be a hardware circuit and software combined.

In another design, the apparatus is a communication chip, and the communication chip may include an output circuit or interface configured to send information or data, and an input circuit or interface configured to receive information or data.

In another design, the apparatus is a UPF, an SMF, or a terminal, and the UPF, the SMF, or the terminal may include a transmitter configured to send information or data, and a receiver configured to receive information or data.

In another design, the apparatus is configured to perform the method in any possible implementation of any one of the foregoing aspects, and the apparatus may be configured in a UPF, an SMF, or a terminal.

According to a fifth aspect, a communication apparatus is provided, including a processor, where the processor is configured to invoke a computer program from a memory and run a computer program, so that the apparatus performs the method in any possible implementation of the foregoing aspects.

Optionally, the apparatus further includes a memory, and the memory may be configured to store instructions and data. The memory is coupled to the processor, and the processor may implement the method described in the foregoing aspects when executing the instruction stored in the memory.

Optionally, the apparatus further includes a transmitter (transmitter) and a receiver (receiver). The transmitter and the receiver may be disposed separately, or may be integrated together, and are referred to as a transceiver (transceiver).

According to the sixth aspect, a computer program product is provided. The computer program product includes a computer program (which may also be referred to as code or instructions). When the computer program is run, a computer is enabled to perform the method in any one of the possible implementations in any one of the foregoing aspects.

According to the seventh aspect, a computer-readable storage medium is provided. The computer-readable storage medium stores a computer program (which may also be referred to as code or instructions). When the computer program is run on a computer, the computer is enabled to perform the method in any one of the possible implementations in any one of the foregoing aspects.

According to the eighth aspect, this application provides a chip system. The chip system includes at least one processor, configured to support implementation of the function involved in any one of the possible implementations in any one of the foregoing aspects. For example, the function includes receiving or processing data involved in the foregoing method.

In a possible design, the chip system further includes a memory. The memory is configured to store program instructions and data. The memory is located inside or outside the processor.

Optionally, the chip system may include a chip, or may include the chip and other discrete components.

### BRIEF DESCRIPTION OF DRAWINGS

FIG. 1 is a schematic diagram of TCP congestion control;
FIG. 2 is a schematic diagram of a bidirectional TCP proxy;
FIG. 3 is a schematic diagram of path switching of a PDU session between different RAN nodes;
FIG. 4 is a schematic architecture diagram of a communication system applicable to the embodiments of this application;
FIG. 5 to FIG. 9 are schematic flowcharts of communication methods provided in the embodiments of this application;
FIG. 10 and FIG. 11 are schematic block diagrams of communication apparatuses provided in the embodiments of this application.

### DESCRIPTION OF EMBODIMENTS

The following describes the technical solutions in this application with reference to the accompanying drawings.

Before the communication method and the related apparatus provided in the embodiments of this application are described, the following several points are first described.

First, in the embodiments shown below, terms and English acronyms and abbreviations, such as TCP, PDU, and a transmission proxy, are examples provided for ease of description, and shall not constitute any limitation on this application. This application does not exclude a possibility of defining another term that can implement a same or similar function in an existing or future protocol.

Second, the first, the second, and various numerical numbers in the embodiments shown below are merely distinguished for ease of description, and are not intended to limit the scope of the embodiments of this application.

Third, "at least one" refers to one or more, and "a plurality of" refers to two or more. "and/or" describes an association relationship between associated objects, and indicates that three relationships may exist. For example, A and/or B may indicate a case in which only A exists, both A and B exist, and only B exists, where A and B may be singular or plural. The character "/" indicates that the relationship between the associated objects is OR. "At least one of the following" or a similar expression thereof refers to any combination of these items, including any combination of a single item or a plural item. For example, at least one (one) of a, b, and c may represent: a, or b, or c, or a and b, or a and c, or b and c, or a, b, and c, where a, b, and c may be single, or may also be multiple.

Fourth, in this application, "sending" and "receiving" indicate the direction of signal transmission. For example, "sending third indication information to the UPF" can be understood as the destination of the third indication information is the UPF. This may include directly sending the information through an air interface, or may also include indirectly sending the information through an air interface by another unit or module. "Receiving first indication information from the SMF" can be understood as the source of the first indication information is the SMF. This may include directly receiving the information from the SMF through an air interface, or may also include indirectly receiving the information from the SMF through an air interface by another unit or module. "Sending" can also be understood as "output" of a chip interface, and "receiving" can also be understood as "input" of a chip interface.

In other words, sending and receiving may be performed between devices, for example, between an SMF and a UPF. Alternatively, sending and receiving may be performed within a device, for example, sending or receiving information through a bus, a trace, or an interface, between components, modules, chips, software modules, or hardware modules within the device.

The following introduces the relevant technologies and concepts involved in this application.

### 1. TCP congestion control

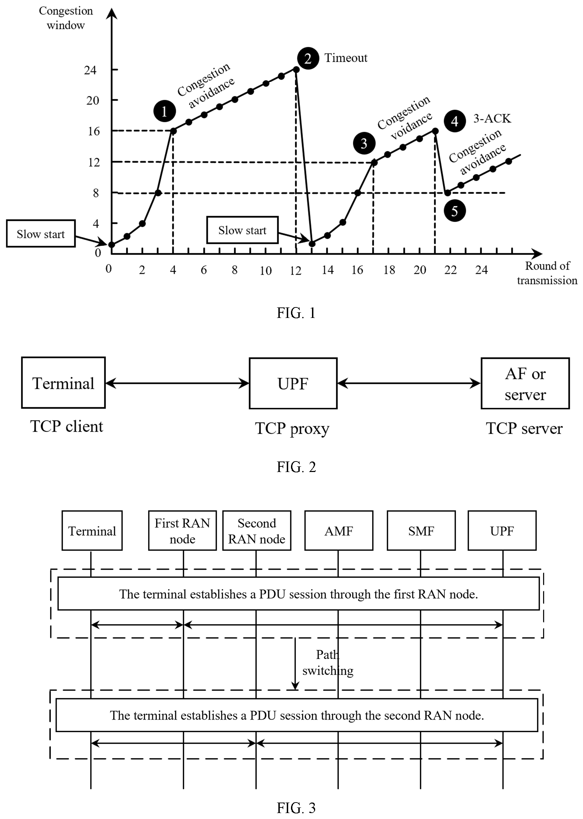

FIG. 1 is a schematic diagram of TCP congestion control. As shown in FIG. 1, the main mechanisms of TCP congestion control include:
(1) Slow start: When a TCP connection is established, the sender first sends a small amount of data at a low data transmission rate. Then, the sender gradually increases the data transmission rate until network congestion occurs.
(2) Congestion avoidance: When network congestion occurs, TCP reduces the data transmission rate to prevent further congestion. The mechanisms of congestion avoidance include the congestion window and the congestion avoidance algorithm.
(3) Fast retransmission: When the receiving end detects packet loss, it repeatedly sends an ACK to the sending end to indicate that an exception has occurred. After receiving three consecutive ACKs, the sending end considers the packet to have been lost and thus triggers a retransmission.
(4) Fast recovery: When packet loss due to mild congestion occurs, the data transmission rate is quickly reduced until the network congestion is eliminated. If the data transmission rate is reduced by half each time packet loss due to congestion is detected, the congestion window can be made to decrease exponentially. When severe congestion occurs (transmission timeout), the system reverts to its initial state.

### 2. Transmission proxy

The transmission proxies involved in this application include TCP transmission proxies and QUIC transmission proxies.

In a connection where a TCP proxy is present, the proxy server establishes a TCP connection with the client. The proxy client establishes another TCP connection with the server. In this way, the client and server complete data exchange through these two TCP connections.

In the bidirectional TCP proxy method shown in FIG. 2, the TCP client and the TCP proxy establish a TCP connection. The TCP proxy and the TCP server establish another TCP connection. These two TCP connections use different sequence numbers. Therefore, during the interaction of TCP packets, after the TCP proxy receives the packet sent by the sender, it needs to modify the packet sequence number before forwarding it to the receiver. This ensures that the client and the server can communicate normally.

Similar to the aforementioned TCP proxy, in the bidirectional QUIC proxy method, the QUIC client and the QUIC proxy establish a QUIC connection. The QUIC proxy and the QUIC server establish another QUIC connection.

In this application, when the transmission proxy is a TCP connection transmission proxy, the TCP client corresponds to the terminal, the TCP proxy corresponds to the UPF, and the TCP server corresponds to the server or the application function (application function, AF) in the core network.

In this application, when the transmission proxy is the QUIC transmission proxy, the QUIC client corresponds to the terminal, the QUIC proxy corresponds to the UPF, and the QUIC server corresponds to the server or the AF in the core network.

### 3. Path switching (path switch) of the PDU session

FIG. 3 is a schematic diagram of path switching of a PDU session between different RAN nodes; The path switching may also be described as traffic switching (traffic switch). This is not limited in this application.

The terminal accesses the first RAN node, and sends a PDU session establishment request message to an access and mobility management function (access and mobility management function, AMF) through the first RAN node. The PDU session establishment request message includes an identifier (identifier, ID) of the PDU session and the data network name (data network name, DNN). Then, the AMF selects the UPF to allocate an internet protocol (internet protocol, IP) address to the terminal, so that the terminal may send data through the IP address. The AMF selects the SMF to configure the N3 interface between the first RAN node and the UPF, and the first RAN node configures a data radio bearer between the first RAN node and the terminal. The SMF stores the user permanent identifier (subscription permanent identifier, SUPI) of the terminal, the identifier of the SMF, the identifier of the PDU session, and the DNN in unified data management (unified data management, UDM). Then, the terminal transmits the service data of the PDU session through the first RAN node.

For example, during the terminal's movement, the terminal accesses the second RAN node and sends a PDU session establishment request message to the AMF through the second RAN node. This PDU session establishment request message carries the identifier of the PDU session and a switching indication (handover indication). After receiving the PDU session establishment request message, the AMF determines, based on the identifier of the PDU session, the SMF corresponding to the PDU session from the UDM. The SMF continues to maintain the IP address of the PDU session unchanged (in this way, the terminal can continue to use this IP address to send data). The SMF configures the N3 interface between the second RAN node and the UPF (in this way, the UPF will send downlink data from the server to the second RAN node instead of the first RAN node). The second RAN node configures a data radio bearer between the second RAN node and the terminal (in this way, the terminal will send uplink data to the second RAN node instead of the first RAN node). Then, the terminal switches the PDU session from the first RAN node to the second RAN node, and transmits the service data of the PDU session through the second RAN node.

During the process of path switching of the PDU session between different RAN nodes, as described above, a TCP connection is established between the terminal and the server. The UPF forwards the service data of the PDU session based on the IP address over this TCP connection.

Referring to FIG. 3, in the case where the terminal capability is limited, that is, after the terminal connects to the second RAN node, the terminal does not support data transmission between the terminal and the first RAN node. Therefore, from the moment the terminal connects to the second RAN node until the path of the PDU session of the terminal is switched, the server sends the downlink data of the terminal to the UPF, and the UPF continues to send the downlink data of the terminal to the first RAN node. However, after the terminal accesses the second RAN node, the communication connection between the terminal and the first RAN node has been interrupted. As a result, the terminal cannot receive from the first RAN node the downlink data forwarded by the UPF. Consequently, the UPF fails to receive the ACK feedback from the terminal for the downlink data, and thus the UPF erroneously considers that network congestion has occurred. As a result, the UPF reduces the data transmission rate to alleviate the network congestion, which in turn affects the communication performance.

In view of this, this application provides a communication method. When path switching is performed for a first session of a terminal, because a communication connection between the terminal and the UPF has been interrupted, the UPF may temporarily stop sending downlink data to the terminal. In this way, loss of downlink data can be avoided, thereby helping improve communication performance.

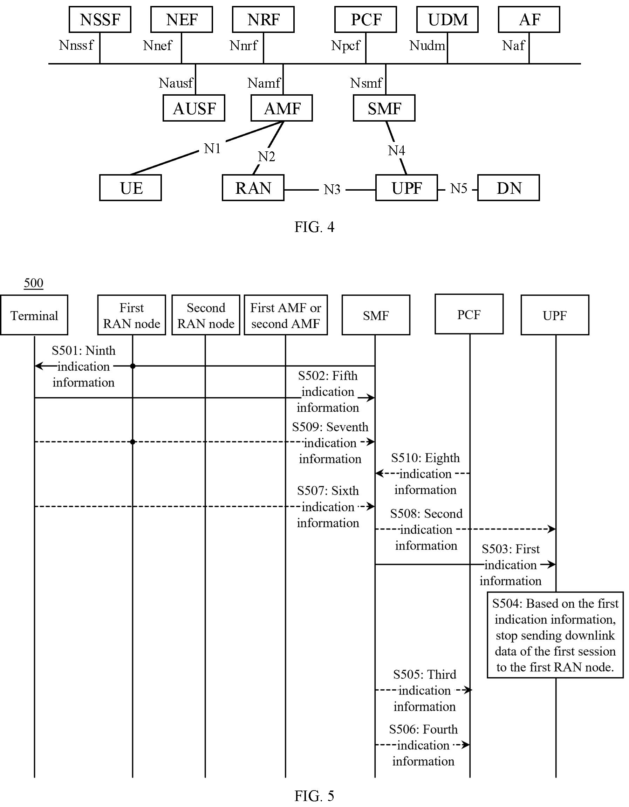

FIG. 4 is a schematic architectural diagram of a communication system applicable to an embodiment of this application. FIG. 4 uses the system architecture of the 5th generation mobile communication technology (5th generation mobile communication technology, 5G) as an example. The network functions and entities (which may also be referred to as network elements) shown include: user equipment (user equipment, UE), a RAN, a UPF, a data network (data network, DN), an AMF, an SMF, an AF, a UDM, a network exposure function (network exposure function, NEF), a policy control function (policy control function, PCF), a network repository function (network repository function, NRF), a network slice selection function (network slice selection function, NSSF), an authentication server function (authentication server function, AUSF). Optionally, the system architecture further includes a network data analytics function (network data analytics function, NWDAF).

In FIG. 4, the UE, RAN, UPF, and DN are typically referred to as data plane network functions and entities. The user's data traffic can be transmitted through a PDU session established between the UE and DN. This transmission process passes through the RAN node and the UPF, which are two network functions and entities. Other network elements are referred to as control plane network functions and entities. They are primarily responsible for functions such as authentication and authorization, registration management, session management (session management, SM), mobility management, and policy control. These functions ensure the reliable and stable transmission of user traffic at the user layer. Among these, the user plane is used to carry service data, while the control plane is used to carry signaling messages.

FIG. 4 illustrates the interaction relationships between network functions and entities, as well as the corresponding interfaces. For example, the interaction between the UE and the AMF can be performed through the N1 interface, and the interaction messages are referred to as N1 messages. Some interfaces are implemented using a service-based interface approach.

The AMF is a network element, module, or component that provides access management functions. It is primarily responsible for the signaling processing part, such as access control, mobility management, attach and detach, and gateway selection functions. When the AMF network element provides services for sessions in the terminal, it will provide the session with control plane storage resources to store the session identifier, the identifier of the SMF network element associated with the session identifier, and so on.

The SMF is a network element, module, or component responsible for handling user services. For example, it performs user plane function selection, user plane function redirection, IP address allocation, bearer establishment, modification, and release, as well as quality of service (QoS) control.

The UPF is responsible for forwarding and receiving user data in the terminal. The UPF can receive user data from the DN, transmit it to the UE through the RAN node, and so on. The UPF network element can also receive user data from the UE through the RAN node and forward it to the DN. The transmission resources and scheduling functions used by the UPF network element to provide services for the UE are managed and controlled by the SMF network element.

The NEF primarily supports secure interaction between the 3rd generation partnership project (3rd generation partnership project, 3GPP) network and the third-party applications.

The AF primarily supports interaction with the 3GPP core network to provide services, such as data routing decisions, policy control functions, or providing some services of a third party to the network side.

The PCF is responsible for making policy control decisions, providing policy rules for control plane functions, and implementing traffic-based charging control functions.

The NSSF is primarily responsible for network slice selection. It determines the network slice instances that a UE is allowed to access based on the UE's slice selection assistance information, subscription information, etc.

The UDM is primarily responsible for managing subscription data of UEs. This includes the storage and management of UE identifiers, as well as UE access authorization, etc.

The AUSF supports both 3GPP and non-3GPP access authentication.

The NRF supports the registration and discovery of network functions.

The UDR is responsible for storing and obtaining the subscription data used by the UDM and PCF.

The NWDAF supports data collection from other network functions and AFs, data collection from operations, administration and maintenance (operations, administration and maintenance, OAM), and analysis to other network functions and AFs.

The RAN node provided in this embodiment of this application may be a base station (base station), a node B (Node B), an evolved node B (evolved NodeB, eNodeB or eNB), or a transmission reception point (transmission reception point, TRP), next generation NodeB (next generation NodeB, gNB) in 5G or NR, a RAN node in open radio access network (open radio access network, O-RAN or open RAN), and a next-generation base station in a sixth generation mobile communication technology (6th generation mobile communication technology, 6G). Alternatively, the RAN node may be a satellite base station in a non-terrestrial network (non-terrestrial network, NTN) communication network, a base station in a future mobile communication system, an access node in a wireless fidelity (wireless fidelity, Wi-Fi) system, or the like. Alternatively, the RAN node may be a module or a unit that implements some functions of the base station. For example, the RAN node may be a centralized unit (centralized unit, CU) or a distributed unit (distributed unit, DU). The function of the CU may be implemented by one entity, or may be implemented by different entities. For example, a function of the CU may be further divided. For example, a control plane (control plane, CP) and a user plane (user plane, UP) are separated, that is, a control plane of the CU (CU-CP) and a user plane of the CU (CU-UP) are separated. The RAN node may be a macro base station, or the RAN node may be a micro base station or an indoor base station, or may be a relay node, a host node, or the like. A specific technology used by the RAN node and a specific device form are not limited in this application.

The terminal provided in the embodiments of this application may also be referred to as a terminal device, user equipment, a mobile station, a mobile terminal, or the like. The terminal may be widely used in various scenarios for communication. The scenario includes, for example, but is not limited to, at least one of the following scenarios: enhanced mobile broadband (enhanced mobile broadband, eMBB), ultra-reliable low-latency communication (ultra-reliable low-latency communication, URLLC), massive machine-type communications (massive machine-type communications, mMTC), device-to-device (device-to-device, D2D), vehicle to everything (vehicle to everything, V2X), machine-type communication (machine-type communication, MTC), internet of things (internet of things, IOT), virtual reality, augmented reality, industrial control, autonomous driving, telemedicine, smart grid, smart furniture, smart office, smart wearable, smart transportation, or smart city, etc. The terminal may be a mobile phone, a tablet computer, a computer with a wireless transceiver function, a wearable device, a vehicle, a helicopter, an airplane, an unmanned aerial vehicle, a ship, a robot, a robotic arm, or a smart home device, etc. This application does not limit a specific technology or a specific device form used by the terminal device.

The foregoing network elements may be fixed in position or may be movable. The foregoing network elements may be deployed on land, including indoors or outdoors, handheld or vehicle-mounted; or may be deployed on water surfaces; or may be deployed on aircraft, balloons, and artificial satellites in the air. This application does not limit the environment/scenario in which the foregoing network elements are located. The foregoing network elements may be deployed in the same or different environments/scenarios. For example, the UE and the RAN node are simultaneously deployed on land; or the UE is deployed on land, and the RAN node is deployed on a water surface, and so on. Specific examples are not listed one by one herein. This application does not limit a communication method between the foregoing multiple network elements.

In the embodiments of this application, the network element shown in FIG. 4 may be a hardware device, or may be a software function running on dedicated hardware, or a software function running on general-purpose hardware. For example, the software function is a virtualized function instantiated on a platform (for example, a cloud platform). Alternatively, the network element is an entity that includes dedicated or general-purpose hardware devices and software functions. This application does not limit a specific form of each network element.

FIG. 5 is a schematic flowchart illustrating a communication method 500 provided by an embodiment of this application. Method 500 may be applicable to the communication system shown in FIG. 4 above, and is implemented through interaction among the multiple network elements shown in FIG. 4. In FIG. 5, the AMF is either the first AMF or the second AMF. Specifically, the first AMF is the AMF to which the terminal accesses through the first RAN node, and the second AMF is the AMF to which the terminal accesses through the second RAN node.

Method 500 includes S501 to S510, with specific steps as follows:
S501: The SMF sends ninth indication information to the terminal. The ninth indication information is used to indicate that the first session of the terminal has the transmission proxy function, or that the first session supports path switching. Correspondingly, the terminal receives the ninth indication information.

In this step, the transmission proxy is a TCP connection transmission proxy or a QUIC transmission proxy.

The first session is a PDU session, a computing session, or a data transmission session.

The first session of the terminal has the transmission proxy function. It can also be described as: the first session of the terminal has the attribute of the transmission proxy. Alternatively, it can be described as: the first session of the terminal provides the function of the transmission proxy. It can also be described as: the UPF of the first session of the terminal provides the function of the transmission proxy.

The first session supports path switching, which can be understood as: the first session supports path switching triggered by the terminal. Alternatively, the first session supports path switching, which can be understood as: the first session supports service continuity during path switching. Specifically, during the path switching of the first session, the data of the first session will not be lost, or the IP address used to transmit the data of the first session will remain unchanged.

After the first session is established, the UPF enables the transmission proxy function. A first communication connection is established between the terminal and the UPF, and a second communication connection is established between the UPF and the server. The first communication connection and the second communication connection are used to transmit data between the terminal and the server. Specifically, the UPF, as a transmission proxy, transmits the data of the first session with the terminal through the first communication connection, and the UPF, as a transmission proxy, transmits the data of the first session with the server through the second communication connection.

In the embodiments of this application, the communication connection is a TCP connection or a QUIC connection. That is, the first communication connection is a TCP connection between the terminal and the UPF, referred to as the first TCP connection. The second communication connection is a TCP connection between the UPF and the server, referred to as the second TCP connection. Alternatively, the first communication connection is a QUIC connection between the terminal and the UPF, referred to as the first QUIC connection. The second communication connection is a QUIC connection between the UPF and the server, referred to as the second QUIC connection.

Optionally, S501 includes: The SMF sends ninth indication information to the terminal through the first RAN node.

Optionally, after receiving the session establishment request message sent by the terminal, the SMF sends a session establishment reception message to the terminal, where the session establishment reception message includes the ninth indication information.

After the terminal receives the ninth indication information, the terminal stores the ninth indication information for the first session. In this way, subsequently, the terminal may initiate path switching procedure for the first session based on the ninth indication information. Refer to S502.

The data of the first session is transmitted through a user plane path. For a first session that has already been established, its user plane path is variable. The movement of the terminal or changes in policies may cause the terminal or the SMF to switch the user plane path of the first session. The path switching in this application refers to switching the user plane path of the first session.

S502: The terminal sends fifth indication information to the SMF. The fifth indication information is used to indicate to switch the path of the first session of the terminal. Correspondingly, the SMF receives the fifth indication information.

In a possible scenario, the connection management (connection management, CM) status between the terminal and the AMF is in the CM-Connected state. The CM-Connected state means that the terminal and the AMF have a signaling connection. When the terminal in the CM-Connected state moves from the network coverage of the first RAN node to the network coverage of the second RAN node, it may trigger path switching procedure for the first session.

S502 includes: The terminal sends fifth indication information based on the ninth indication information. In other words, after determining that the first session has a transmission proxy function or the first session supports path switching, the terminal may send the fifth indication information to trigger the path switching procedure in this embodiment of this application, which supports service continuity of the first session during path switching.

For a scenario where the terminal capability is limited, when the terminal moves to the network coverage area of the second RAN node and accesses the second RAN node, the terminal no longer supports data transmission with the first RAN node. For a terminal with limited capability, after the terminal connects to the second RAN node, the terminal can no longer be connected to the first RAN node. In other words, the terminal with limited capability cannot be connected to both the first RAN node and the second RAN node at the same time.

In a possible scenario, the terminal disconnects the communication connection between the terminal and the first RAN node, and accesses the second RAN node. In this case, that the terminal sends the fifth indication information to the SMF includes: The terminal sends the fifth indication information to the SMF through the second RAN node. The fifth indication information may be a handover indication (handover indication) or an existing session (existing session). For ease of distinguishing and description, this scenario is recorded as scenario 1.

Optionally, the handover indication or the existing session is carried in a non-access stratum (non-access stratum, NAS) message. The handover indication or the existing session is a request type for establishing the first session. When the request type is the handover indication or the existing session, it indicates that the association is with the existing session.

Optionally, the NAS message further includes an identifier of the first session. Based on the identifier of the first session, the first session can be associated, and the SMF that manages the first session can be determined.

It should be noted that, if the terminal does not indicate whether the terminal supports data transmission with the first RAN node during the path switching of the first session, the network side assumes by default that the terminal does not support data transmission with the first RAN node during the path switching of the first session.

With reference to the above scenario 1, the terminal sends the fifth indication information to the SMF through the second RAN node, including: the terminal sends the fifth indication information to the second AMF through the second RAN node. Further, the second AMF sends the fifth indication information to the SMF. This may be understood as that the terminal transparently transmits the fifth indication information through the second AMF.

In another possible scenario, the terminal first maintains an uninterrupted connection with the first RAN node. Then, the terminal sends the fifth indication information to the SMF, which includes: the terminal sends the fifth indication information to the SMF through the first RAN node. For ease of differentiation and explanation, this scenario is recorded as scenario 2.

In scenario 2, the fifth indication information is used to indicate path switching of the first session of the terminal. It can also be described as: the fifth indication information is used to indicate to prepare path switching of the first session of the terminal. After that, the terminal triggers path switching procedure through the second RAN node. For specific details, refer to the description of method 900 in the following text. This will not be further elaborated here.

With reference to the above scenario 2, the terminal sends the fifth indication information to the SMF through the first RAN node, which includes: the terminal sends the fifth indication information to the first AMF through the first RAN node. Further, the first AMF sends the fifth indication information to the SMF.

It should be noted that, in this application, data may be transmitted between the terminal and the SMF through the AMF. For example, the information sent by the terminal to the SMF that appears in the following text may be understood as: the terminal sends the information to the SMF through the RAN node (the first RAN node or the second RAN node) and the AMF (the first AMF or the second AMF).

In this application, data may also not be transmitted between the terminal and the SMF through the AMF. For example, that the terminal sends information to the SMF in the following description may be understood as: The terminal sends information to the SMF through the RAN node (the first RAN node or the second RAN node).

Similarly, sending information by the SMF may be understood as: sending information by the SMF to the terminal through the AMF (the first AMF or the second AMF) and the RAN node (the first RAN node or the second RAN node).

A scenario in which the terminal or the SMF is used as a receive end of the information is similar to a scenario in which the terminal or the SMF is used as a transmit end of the information, and details are not described herein again.

S503: When determining that the UPF provides a transmission proxy function for the first session, the SMF sends first indication information to the UPF based on the fifth indication information, where the first indication information is used to indicate to stop downlink data transmission of the first session. Correspondingly, the UPF receives the first indication information.

Stopping downlink data transmission of the first session may be described as stopping transmitting the downlink data of the first session on the first communication connection.

The SMF stores information used to indicate the UPF to provide a transmission proxy function for the first session, or the SMF stores information used to indicate the UPF to enable the transmission proxy function for the first session. After receiving the fifth indication information, the SMF determines that path switching is needed for the first session. In addition, the SMF determines, based on the stored information, that the UPF provides a transmission proxy function for the first session. Then, the SMF sends the first indication information to the UPF, to support service continuity of the first session during the path switching.

S504: The UPF stops, based on the first indication information, sending the downlink data of the first session to the first RAN node.

In this step, the UPF stops sending the downlink data of the first session to the first RAN node. In this way, loss of the downlink data of the first session can be avoided, and impact caused by path switching on data transmission performance of the terminal can be reduced.

With reference to the scenario 1 in S502 above, the terminal has already disconnected from the first RAN node when receiving the first indication information, and the UPF stops sending the downlink data of the first session to the first RAN node based on the first indication information. This can avoid loss of subsequent downlink data of the first session and reduce the impact on data transmission performance of the terminal caused by path switching.

With reference to the scenario 2 in S502 above, the terminal disconnects from the first RAN node after receiving the first indication information. This can prevent the loss of downlink data that the UPF has already sent to the terminal during the period from when the terminal accesses the second RAN node to when the UPF stops sending the downlink data of the first session. This, in turn, helps to better improve the service continuity of the first session and reduce the impact of path switching on the data transmission performance of the terminal.

Optionally, in S504, the UPF stops sending the downlink data of the first session to the first RAN node, which includes: the UPF stops sending the downlink data of the first session to the first RAN node through the first communication connection.

As described in the preceding text, the first communication connection is a communication connection between the terminal and the UPF. As the terminal does not support data transmission with the first RAN node during the path switching period of the first session, and at this time, the path of the first session has not yet been switched to the second RAN node, the UPF may stop sending the downlink data of the first session to the first RAN node through the first communication connection.

The UPF stops sending downlink data of the first session to the first RAN node through the first communication connection. This can also be described as: the UPF stops sending downlink data of the first session to the first RAN node on the first communication connection.

When the first communication connection between the terminal and the UPF is interrupted, the second communication connection between the UPF and the server is not affected. The UPF can normally receive downlink data of the first session from the server through the second communication connection, and send an ACK feedback to the server. In this way, the server can maintain the current data transmission rate and continue to send downlink data of the first session to the UPF. This is beneficial for improving the communication performance of the first session. Here, the second communication connection is a communication connection between the UPF and the server.

Optionally, method 500 further includes S505: The SMF sends third indication information to the UPF, where the third indication information is used to indicate a first duration, and the first duration is a duration for buffering downlink data of the first session. After receiving the third indication information, the UPF buffers, according to the first duration, downlink data of the first session that is transmitted by the server through the second communication connection. When the duration for buffering the downlink data of the first session reaches the first duration, the UPF stops buffering.

Optionally, the SMF may determine the first duration based on the duration required for the preconfigured switching path.

Optionally, the UPF stores communication connection parameters used when the UPF stops sending downlink data of the first session to the first RAN node through the first communication connection. For example, the communication connection parameters may include a sending window, a data transmission rate, and the like.

Optionally, method 500 further includes S506: The SMF sends fourth indication information to the UPF, where the fourth indication information is used to indicate to start downlink data transmission of the first session. Correspondingly, the UPF receives the fourth indication information. Further, the UPF sends downlink data of the first session to the second RAN node through the first communication connection according to the stored communication connection parameters.

Among them, the fourth indication information may be the second RAN node's access network tunnel information (AN tunnel information). After the UPF receives the second RAN node's access network tunnel information, it indicates that the path switching of the first session has been completed. The UPF can then start sending downlink data of the first session to the second RAN node through the first communication connection according to the access network tunnel information.

Optionally, after receiving the access network tunnel information, the UPF receives, from the SMF, indication information for starting downlink data transmission. Based on this indication information, the UPF begins sending downlink data of the first session to the second RAN node.

It should be noted that before the path switching of the first session, the communication connection between the terminal and the UPF is the first communication connection, and the data transmission between the terminal and the UPF through the first communication connection passes through the first RAN node. In other words, the data transmission between the terminal and the UPF on the first communication connection passes through the first RAN node.

After the path switching of the first session, the communication connection between the terminal and the UPF is still the first communication connection, but the data transmission between the terminal and the UPF through the first communication connection passes through the second RAN node. In other words, the data transmission between the terminal and the UPF on the first communication connection passes through the second RAN node.

Optionally, method 500 further includes S507: The terminal sends sixth indication information, where the sixth indication information is used to indicate that the terminal does not support data transmission with the first RAN node during the path switching of the first session.

The terminal does not support data transmission with the first RAN node during the path switching of the first session. This can be understood as: the terminal does not support data transmission with the source RAN node during the path switching of the first session. Alternatively, this can be understood as: the terminal does not support data transmission on the source path during the path switching of the first session.

In a possible implementation, the terminal may send the sixth indication information before S502. For example, during the period when the terminal establishes the first session through the first AMF, the terminal sends the sixth indication information to the SMF through the first AMF.

In another possible implementation, the terminal may simultaneously send the fifth indication information and the sixth indication information. In this case, S502 and S507 may be combined into one step. The NAS message described in S502 may include the fifth indication information and the sixth indication information.

Further, when the fifth indication information and the sixth indication information are simultaneously sent, the SMF, based on the fifth indication information, sends the first indication information to the UPF includes: the SMF, based on the fifth indication information and the sixth indication information, sends the first indication information to the UPF. In this manner, the SMF determines, based on the fifth indication information, that the first session needs to be switched to the new path, and further determines, based on the sixth indication information, that the terminal cannot transmit data with the first RAN node during the path switching period. Therefore, under the premise that the transmission proxy function has been enabled, the UPF needs to stop the transmission of downlink data of the first session.

It should be noted that the terminal may not send the sixth indication information. In other words, the terminal may not indicate to the AMF or the SMF whether the terminal supports data transmission with the first RAN node during path switching of the first session. In the scenario of no indication, the AMF or the SMF assumes by default that the terminal does not support data transmission with the first RAN node during path switching of the first session.

Optionally, before the SMF receives the fifth indication information, method 500 further includes S508: The SMF sends second indication information to the UPF. The second indication information is used to indicate to provide a transmission proxy function for the first session. In this manner, the SMF indicates to the UPF to enable the transmission proxy function for the first session before path switching of the first session.

Providing a transmission proxy function for the first session may be described as enabling the transmission proxy function for the first session.

Optionally, S508 specifically includes: The SMF sends second indication information to the UPF based on the sixth indication information. After receiving the sixth indication information, the SMF confirms that the terminal cannot transmit data with the first RAN node during path switching. Therefore, to ensure service continuity of the first session during path switching, the SMF may indicate to the UPF to provide a transmission proxy function for the first session.

Optionally, before S508, method 500 further includes S509: The SMF receives seventh indication information from the terminal, where the seventh indication information is used to indicate that the terminal supports path switching of the first session or that the terminal supports path switching.

The terminal supports path switching for the first session, which can also be described as: The terminal requests to provide service continuity for the first session during path switching. This also means that the terminal requests the SMF to provide service continuity for the first session during path switching. In this indication method, the SMF enables the transmission proxy function for the first session. In other words, the transmission proxy function can be enabled for the first session of the terminal. For another session initiated by the terminal, for example, a second session, the terminal needs to indicate again whether path switching of the second session is supported.

The terminal supports path switching, which can also be described as: The terminal requests to provide service continuity for the session of the terminal during path switching. The session of the terminal includes the first session. In this indication method, the SMF controls, based on the terminal granularity, the enabling of the transmission proxy function. In other words, when the SMF determines that the first session is a session of the terminal, the transmission proxy function can be enabled for the first session of the terminal.

Further, S508 includes: The SMF sends the second indication information to the UPF based on the seventh indication information. In this manner, the SMF determines, based on the seventh indication information, that the terminal requests to provide service continuity for the first session during the path switching. Then, the SMF instructs the UPF to enable a transmission proxy function to support service continuity of the first session of the terminal during the path switching. In other words, service continuity is provided for the first session during the path switching.

Optionally, before S508, the method 500 further includes S510: The SMF receives eighth indication information, where the eighth indication information is used to indicate support for service continuity of the first session during the path switching, or is used to indicate that path switching of the terminal is allowed. Supporting service continuity of the first session during the path switching may also be described as allowing service continuity to be provided for the first session during the path switching.

Optionally, S510 includes: receiving, by the SMF, eighth indication information from the first AMF. The first AMF obtains the eighth indication information from the PCF or the UDM. In this manner, in a process in which the terminal registers with the network, the first AMF first obtains the eighth indication information from the PCF or the UDM. When the first session is subsequently established, the SMF obtains the eighth indication information from the first AMF.

Optionally, S510 includes: The SMF receives eighth indication information from the PCF or the UDM. In this manner, when establishing the first session, the SMF obtains the eighth indication information from the PCF or the UDM.

Further, S508 includes: The SMF sends the second indication information to the UPF based on the eighth indication information.

Optionally, after the UPF enables the transmission proxy function for the first session, the SMF sends ninth indication information to the terminal. The ninth indication information is used to indicate that the first session has the transmission proxy function or that the first session supports path switching. Correspondingly, the terminal receives the ninth indication information. It should be understood that the SMF may send the ninth indication information to the terminal through the first AMF.

It should be understood that, after the UPF enables the transmission proxy function for the first session, it means that the first session has the transmission proxy function or that the first session supports path switching. That the first session supports path switching means that the first session supports service continuity during path switching.

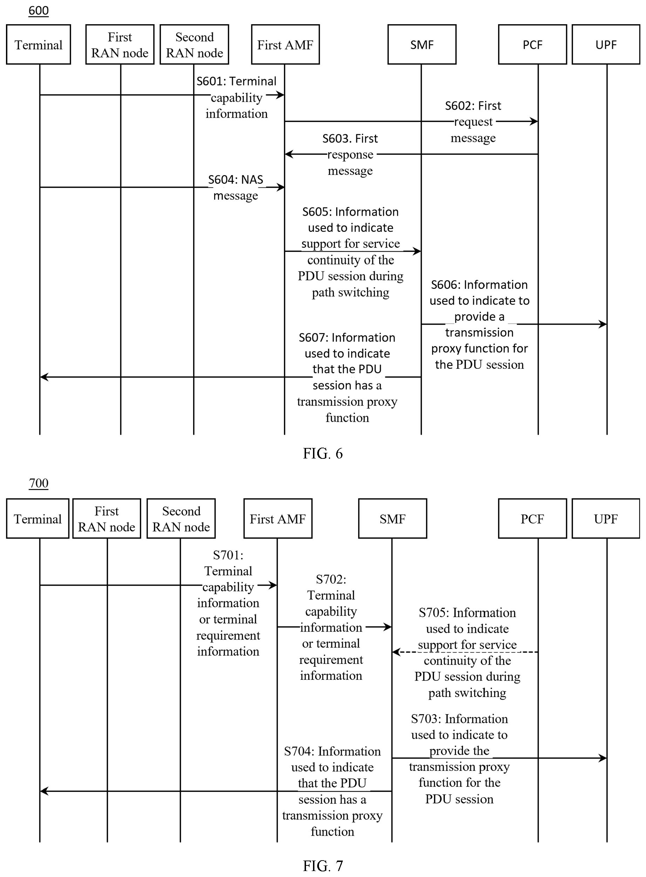

With reference to the description of the method 500, with reference to FIG. 6 to FIG. 10, the embodiment of this application is described in detail in the following by using an example in which a session of the terminal is used as a PDU session (that is, the first session is a PDU session of the terminal), the transmission proxy is a TCP proxy, and the terminal interacts with the SMF through the AMF.

The PCF shown in FIG. 6 to FIG. 9 may alternatively be replaced with a UDM, that is, interaction between another network element and the PCF may alternatively be replaced with interaction with the UDM.

The following describes the communication method in this application from two phases. In the first phase, the SMF configures the UPF to enable a transmission proxy function for the PDU session of the terminal. In the second phase, based on the premise that the SMF has configured the UPF to enable the transmission proxy function, the SMF configures the UPF to stop downlink data transmission during path switching of the PDU session.

The first phase includes two different implementation procedures, which are respectively corresponding to the method 600 and the method 700 in the following. The second phase includes two different implementation procedures, which respectively correspond to the method 800 and the method 900 described below.

The processes of the first phase and the second phase can be combined and implemented to avoid a situation where, during the path switching of a PDU session, the UPF erroneously believes that network congestion has occurred and thus reduces the data transmission rate.

For example, after implementing the steps described in method 600, the steps described in method 800 are implemented.

For another example, after implementing the steps described in method 600, the steps described in method 900 are implemented.

For another example, after implementing the steps described in method 700, the steps described in method 800 are implemented.

For another example, after implementing the steps described in method 700, the steps described in method 900 are implemented.

First, the following describes, with reference to FIG. 6, a specific procedure in which an SMF configures a UPF to enable a transmission proxy function for a PDU session of a terminal.

FIG. 6 is a schematic flowchart of a communication method 600 according to an embodiment of this application. Method 600 includes S601 to S607, and specific steps are as follows:
S601. The terminal sends terminal capability information to the first AMF. The terminal capability information indicates that the terminal supports path switching. Correspondingly, the first AMF receives the terminal capability information.

Optionally, that the terminal sends the terminal capability information to the first AMF includes: The terminal sends a registration request message (registration request message) to the first AMF, where the registration request message includes the terminal capability information, and the terminal capability information corresponds to the seventh indication information in the foregoing, or the seventh indication information in the foregoing is the terminal capability information.

The terminal supports path switching, which can also be described as: The terminal requests to provide service continuity for a PDU session of the terminal during path switching.

The terminal sends terminal capability information to the first AMF. Specifically, this includes: the terminal sends the terminal capability information to the first AMF through the first RAN node.

Optionally, when the terminal is authorized to perform path switching, the registration request message includes the terminal capability information to indicate that the terminal supports path switching.

S602: The first AMF sends a first request message to the PCF. The first request message is used to request the subscription information or policy control information of the terminal. Correspondingly, the PCF receives the first request message.

S603: The PCF sends a first response message to the first AMF. The first response message includes information used to indicate support for service continuity of a PDU session during the path switch. This information corresponds to the eighth indication information mentioned above. Correspondingly, the first AMF receives the first response message.

Optionally, the first AMF, based on the received terminal capability information, stores, in the context of the terminal, the information used to indicate support for service continuity of a PDU session during the path switch.

In the above S601 to S603, during the process of the terminal registering with a network, the terminal carries terminal capability information, to indicate that the terminal supports path switching. Further, the first AMF determines, based on the first response message, that the PDU session of the terminal supports service continuity during path switching, or allows the PDU session of the terminal to provide service continuity during path switching. In this way, subsequently, when the terminal requests to establish a PDU session, the first AMF may indicate to the SMF to provide service continuity for the PDU session of the terminal during the path switching. Then, the SMF enables the TCP connection transmission proxy function for the PDU session, thereby supporting service continuity of the PDU session of the terminal during path switching. For details, refer to the following steps.

S604: The terminal sends a NAS message (NAS message) to the first AMF. Correspondingly, the first AMF receives the NAS message.

Specifically, the terminal sends the NAS message to the first AMF by using the first RAN node. The NAS message includes but is not limited to an identifier of a PDU session, a PDU session establishment request (PDU session establishment request) message, a DNN, and an S-NSSAI. The PDU session establishment request message includes the identifier of the PDU session, session and service continuity (session and service continuity, SSC) mode information, and the like.

Starting from this step, the terminal begins to establish a PDU session.

S605: The first AMF sends, to the SMF, information used to indicate support for service continuity of the PDU session during path switching. Correspondingly, the SMF receives the information used to indicate support for service continuity of the PDU session during path switching.

Optionally, the information used to indicate support for service continuity of the PDU session during path switching is carried in a request (PDUSession_CreateSMContext request) message for creating a context for managing the PDU session. The request message for creating the context for managing the PDU session further includes, but is not limited to, the SUPI, DNN, S-NSSAI, and the PDU session establishment request message.

Optionally, before this step, the first AMF selects, from at least one SMF, an SMF that supports path switching. The SMF in this step is an SMF that supports path switching.

S606: The SMF sends, to the UPF, information used to indicate to provide a transmission proxy function for the PDU session. This information corresponds to the second indication information mentioned above. Correspondingly, the UPF receives the information used to indicate to provide the transmission proxy function for the PDU session.

Optionally, the information used to indicate to provide transmission proxy function for the PDU session is carried in an N4 session establishment request (N4 session establishment request) message.

Optionally, before this step, the SMF may select, from at least one UPF, a UPF that supports a TCP connection transmission proxy. The UPF in this step is the UPF that supports the TCP connection transmission proxy.

Optionally, before this step, the SMF determines, based on the eighth indication information mentioned above, to enable the TCP connection transmission proxy function for the PDU session of the terminal.

Optionally, before this step, the SMF determines, based on the seventh indication information mentioned above, to enable the TCP connection transmission proxy function for the PDU session of the terminal.

After the UPF enables the TCP connection transmission proxy function, the SMF records that the UPF has enabled the TCP connection transmission proxy function. In this way, the SMF may subsequently perform related configuration on the UPF, for example, configure the UPF to stop or start downlink data transmission of the PDU session.

S607: The SMF sends, to the terminal, information used to indicate that the PDU session has a transmission proxy function, where the information is corresponding to the ninth indication information described above. Correspondingly, the terminal receives the information used to indicate that the PDU session has a transmission proxy function.

In this step, the information used to indicate that the PDU session has a transmission proxy function may also be replaced with information used to indicate that the PDU session supports path switching. The terminal may subsequently initiate path switching procedure based on the information used to indicate that the PDU session has a transmission proxy function. For details, refer to the method 800 or the method 900 in the following. Details are not described herein temporarily.

In this embodiment of this application, in a process in which the terminal registers with the network, the terminal sends the terminal capability information to the first AMF. After determining that service continuity of the PDU session of the terminal during the path switching is supported, the first AMF may indicate to the SMF that the first AMF supports the service continuity of the PDU session during the path switching when requesting the SMF to establish the PDU session. Further, the SMF may configure the UPF to enable a TCP connection transmission proxy function for the PDU session.

In this embodiment of this application, the SMF controls enabling of the TCP connection transmission proxy function based on a terminal granularity. In other words, when the SMF obtains the information used to indicate that service continuity of the PDU session is supported during the path switching, the SMF can determine that service continuity of any PDU session of the terminal during path switching is supported.

With reference to FIG. 7, the following describes another specific procedure in which the SMF configures the UPF to enable a transmission proxy function for a PDU session of a terminal.

FIG. 7 is a schematic flowchart of still another communication method 700 according to an embodiment of this application. Before the method 700, the terminal performs a registration procedure, and the first AMF is responsible for terminal access and mobility management and terminal registration management.

Optionally, in a process in which the terminal registers with a network, the terminal receives tenth indication information from the first AMF, where the tenth indication information is used to indicate that the terminal is authorized to perform path switching.

Different from method 600, in a process in which the terminal registers with the network, the terminal may temporarily not send the terminal capability information, but may send the terminal capability information or the terminal requirement information in a subsequent process of establishing a PDU session.

Method 700 includes S701 to S705, with specific steps as follows:
S701: The terminal sends terminal capability information or terminal requirement information to the first AMF. Correspondingly, the first AMF receives the terminal capability information or the terminal requirement information.

The terminal capability information corresponds to the seventh indication information mentioned above, indicating that the terminal supports path switching.

Alternatively, the terminal requirement information corresponds to the seventh indication information mentioned above, indicating that the terminal supports path switching of a PDU session, or in other words, indicating that the terminal supports service continuity of the PDU session during path switching. Alternatively, the terminal requirement information is a request for providing service continuity for the PDU session during path switching.

Optionally, S701 includes: The terminal sends an NAS message to the first AMF through the first RAN node. The NAS message includes the terminal capability information or the terminal requirement information. The NAS message further includes but is not limited to: an identifier of a PDU session, a PDU session establishment request message, a DNN, and an S-NSSAI.

Optionally, in a scenario in which the terminal receives the tenth indication information, the terminal adds the terminal capability information or the terminal requirement information to the NAS message.

Optionally, the first AMF selects, from at least one SMF, an SMF that supports path switching based on the terminal capability information or the terminal requirement information, and performs the operation of S702.

S702: The first AMF sends the terminal capability information or the terminal requirement information to the SMF. Correspondingly, the SMF receives the terminal capability information or the terminal requirement information.

Optionally, S702 includes: The first AMF sends, to the SMF, a request message for creating a context for managing a PDU session. The request message for creating the context for managing the PDU session includes the terminal capability information or the terminal requirement information.

For an introduction to the terminal capability information and the terminal requirement information, refer to the description in S701. Details are not described herein again.

S703: The SMF sends, to the UPF, information used to indicate to provide a transmission proxy function for a PDU session. This information corresponds to the second indication information mentioned above. Correspondingly, the UPF receives this information used to indicate to provide the transmission proxy function for the PDU session.

In this step, the UPF is a UPF that supports a TCP connection transmission proxy function.

Information used to indicate to provide the transmission proxy function for the PDU session may also be described as information used to indicate to enable a TCP connection transmission proxy function for the PDU session.

The SMF records that the PDU session uses the TCP connection transmission proxy function. In other words, the UPF has enabled the TCP connection transmission proxy function for the PDU session.

Optionally, S703 includes: The SMF sends, to the UPF, an N4 session establishment request message, where the N4 session establishment request message carries the information used to indicate to provide the transmission proxy function for the PDU session.

Optionally, before S703, method 700 further includes S705: The SMF receives, from the PCF or the UDM, information used to indicate support for service continuity of the PDU session during path switching. The information corresponds to the eighth indication information in the foregoing content.

Specifically, the SMF sends, to the PCF or the UDM, the parameters of the PDU session, for example, a DNN, an S-NSSAI, or an SSC mode. The PCF or the UDM determines, based on the parameters of the PDU session, support for service continuity of the PDU session during path switching, or determines that service continuity is allowed to be provided for the PDU session during path switching.

For example, support for service continuity of the PDU session corresponded with a preconfigured DNN or a preconfigured S-NSSAI during path switching.

For example, when the SSC mode of the PDU session indicates support for service continuity, the PCF or the UDM determines support for service continuity of the PDU session during path switching.

For example, the PCF or the UDM determines, based on the session subscription information of the terminal, that service continuity of the PDU session during the path switching is supported.

Optionally, before S703, the SMF determines, based on one or more of the following information, to enable the TCP connection transmission proxy function for the PDU session: terminal capability information, terminal requirement information, DNN configuration information, or information used to indicate that service continuity of the PDU session during path switching is supported. The DNN configuration information indicates that a TCP connection transmission proxy function is used when the DNN is accessed.

For example, the SMF receives the terminal capability information or the terminal requirement information, and the DNN configuration information indicates that the DNN corresponding to the PDU session may use a TCP connection transmission proxy function. Then, the SMF determines to enable the TCP connection transmission proxy function for the PDU session.

For example, the SMF receives the terminal capability information or the terminal requirement information, and receives, from the PCF or the UDM, information used to indicate that service continuity of the PDU session is supported during the path switching period. Then, the SMF determines to enable the TCP connection transmission proxy function for the PDU session.

For example, during the path switching process of the PDU session, after the terminal connects to the second RAN node, the terminal does not support data transmission with the first RAN node. In this case, the terminal indicates, to the SMF through the first AMF, that the terminal does not support data transmission with the first RAN node during the path switching period of the PDU session. Then, the SMF determines to enable a TCP connection transmission proxy function for the PDU session.

S704: The SMF sends, to the terminal, information used to indicate that the PDU session has a transmission proxy function. This information may be the ninth indication information mentioned above. Correspondingly, the terminal receives the information used to indicate that the PDU session has a transmission proxy function.

The terminal stores the information used to indicate that the PDU session has a transmission proxy function. Subsequently, the terminal may initiate path switching procedure based on the information used to indicate that the PDU session has a transmission proxy function. For details, refer to the method 800 or the method 900 in the following. Details are not described herein.

Optionally, method 700 further includes: the SMF sends, through the first AMF, an IP address of the UPF to the terminal. After receiving the IP address of the UPF, the terminal establishes a first TCP connection with the UPF. Then, the terminal requests, from the UPF, to establish a TCP connection with the server. The UPF, as a TCP proxy, establishes a second TCP connection with the server. In this way, the UPF, as a TCP proxy, transmits data between the terminal and the server.

In this embodiment of this application, in a process in which the terminal establishes a certain PDU session, the SMF determines to enable the TCP connection transmission proxy function for the PDU session. Further, the SMF configures the UPF to enable the TCP connection transmission proxy function.

In this embodiment of this application, the SMF controls the enabling of the TCP connection transmission proxy function based on a PDU session granularity. In other words, the enabling of the TCP connection transmission proxy function is performed for certain PDU sessions. In other words, the TCP connection transmission proxy function is enabled only for certain PDU sessions. This helps increase the flexibility of enabling the TCP connection transmission proxy function.

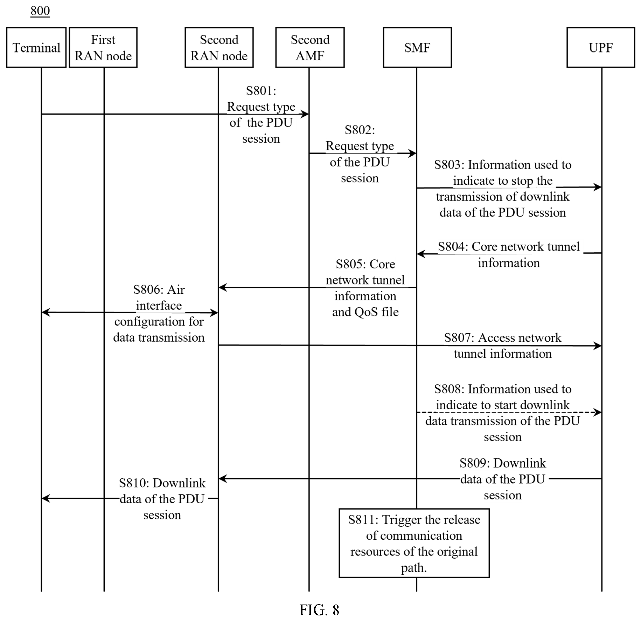

Two different implementation procedures of the first phase are described above with reference to FIG. 6 and FIG. 7. With reference to FIG. 8, the following describes a specific procedure in which the SMF configures the UPF to stop downlink data transmission during path switching of the PDU session.

FIG. 8 is a schematic flowchart of still another communication method 800 according to an embodiment of this application. In the method 800, after a terminal accesses the second RAN node, the terminal does not support data transmission with the first RAN node.

The method 800 includes S801 to S811, and specific steps are as follows:
S801: The terminal sends a request type of the PDU session to the second AMF, where the request type of the PDU session is a handover indication or an existing PDU session. Correspondingly, the second AMF receives the request type of the PDU session.

When the request type of the PDU session is a handover indication or an existing PDU session, the SMF determines that path switching is needed for the PDU session. The request type of the PDU session, that is, the handover indication or the existing PDU session, corresponds to the foregoing fifth indication information, or the foregoing fifth indication information is the handover indication or the existing PDU session.

Optionally, S801 may specifically include: The terminal sends a NAS message to the second AMF through the second RAN node. The NAS message includes the request type of the PDU session and the identifier of the PDU session.

Optionally, the NAS message further includes information used to indicate that the terminal does not support data transmission with the first RAN node during the path switching of the PDU session. This information corresponds to the sixth indication information mentioned above.

S802: The second AMF sends the request type of the PDU session to the SMF. Correspondingly, the SMF receives the request type of the PDU session.

Optionally, S802 includes: The SMF sends, to the UPF, a request (PDUSession_UpdateSMContext request) message for updating the context of PDU session management. The request message for updating the context of PDU session management includes the request type of the PDU session and the identifier of the PDU session.

Optionally, the request message for updating the context of PDU session management further includes information used to indicate that the terminal does not support data transmission with the first RAN node during the path switching of the PDU session.

With reference to the descriptions in the foregoing method 600 or method 700, in a process of establishing the PDU session, the SMF records that the PDU session uses a TCP connection transmission proxy function, that is, the UPF provides the transmission proxy function for the PDU session. When determining that the UPF provides the transmission proxy function for the PDU session, the SMF performs S803 based on the request type of the PDU session received in S801.

S803: The SMF sends, to the UPF, information used to indicate to stop downlink data transmission of the PDU session. The information corresponds to the foregoing first indication information. Correspondingly, the UPF receives the information used to indicate to stop downlink data transmission of the PDU session.

After receiving the information used to indicate to stop downlink data transmission of the PDU session, the UPF stops downlink data transmission with the terminal. Specifically, the UPF stops sending, to the first RAN node, the downlink data of the PDU session through the first TCP connection.

The UPF stores the TCP parameters used when it stops sending downlink data of the PDU session through the first TCP connection. For example, the TCP parameters include a sending window, a data transmission rate, and the like. The second TCP connection between the UPF and the server is not affected. The UPF can continue to receive downlink data of the PDU session transmitted through the second TCP connection, and buffer the downlink data of the PDU session transmitted through the second TCP connection.

Optionally, S803 includes: The SMF sends an N4 modification message (N4 modification) to the UPF. The N4 modification message includes the information used to indicate to stop the transmission of downlink data of the PDU session.

Optionally, the SMF further configures, for the UPF, a first duration used to buffer the downlink data of the PDU session.

S804: The UPF sends core network tunnel information (CN tunnel information) to the SMF. The core network tunnel information includes an IP address and a port number that are used by the UPF to receive uplink data. Correspondingly, the SMF receives the core network tunnel information.

S805: The SMF sends the core network tunnel information and the QoS file to the second RAN node through the second AMF. Correspondingly, the second RAN node receives the core network tunnel information and the QoS file.

The QoS file includes the QoS parameters of the PDU session.

S806: The second RAN node interacts with the terminal to configure an air interface for data transmission.

S807: The second RAN node sends the access network tunnel information (AN tunnel information) to the UPF. The access network tunnel information includes the IP address and port number used by the second RAN node to receive downlink data. Correspondingly, the UPF receives the access network tunnel information.

Specifically, the second RAN node sends the access network tunnel information to the UPF through the second AMF and the SMF.

The access network tunnel information in this step may be the fourth indication information mentioned above.

Optionally, after S807, method 800 further includes S808: The SMF sends, to the UPF, information used to indicate to start downlink data transmission of the PDU session. The information may correspond to the fourth indication information mentioned above. In other words, after sending the access network tunnel information to the UPF, the SMF may further send, to the UPF, the information used to indicate to start downlink data transmission of the PDU session. Based on the information, the UPF starts sending downlink data of the PDU session to the second RAN node.

S809: The UPF sends, to the second RAN node, the downlink data of the PDU session. Correspondingly, the second RAN node receives the downlink data of the PDU session.

In this step, after receiving the access network tunnel information, the UPF determines that the path switching of the PDU session has been completed. Therefore, based on the access network tunnel information, the UPF starts sending the downlink data of the PDU session to the second RAN node.

Specifically, the UPF determines the address information of the second RAN node based on the access network tunnel information, where the address information includes the IP address and the port number. In this way, the UPF sends the downlink data of the PDU session to the second RAN node based on the stored TCP connection parameters through the first TCP connection. The first TCP connection is a TCP connection between the terminal and the UPF. After the path switching of the PDU session is completed, data transmission between the terminal and the UPF on the first TCP connection passes through the second RAN node.

S810: The second RAN node sends the downlink data of the PDU session to the terminal. Correspondingly, the terminal receives the downlink data of the PDU session.

In the foregoing period from S803 to S807, the first TCP connection between the terminal and the UPF is temporarily interrupted, the second TCP connection between the UPF and the server is normal, and data transmission can be normally performed. This includes that the UPF receives downlink data of the PDU session through the second TCP connection. The UPF sends the ACK feedback for the downlink data to the server through the second TCP connection. The UPF buffers the downlink data received from the server, and does not need to perform the slow start. In this way, the UPF can be prevented from continuously trying to reduce the data transmission rate to send the downlink data to the terminal. After the connection between the terminal and the UPF is recovered, the UPF may send the buffered downlink data and the subsequently received downlink data to the terminal at the original data transmission rate.

S811: The SMF triggers the release of the communication resources of the original path (i.e., the path passing through the first RAN node). The resources of the original path include the communication resources between the terminal and the first RAN node, and the communication resources between the first RAN node and the UPF.

Specifically, the SMF sends, through the first AMF to the first RAN node, an N2 session management resource release request (N2 SM resource release request) message. The N2 session management resource release request message includes the identifier of the PDU session. After receiving the N2 session management resource release request message, the first RAN node releases the context information of the PDU session associated with the identifier of the PDU session.

Optionally, S811 may be performed after S803, or may be performed after S810. This is not limited in this embodiment of this application.

In this embodiment of this application, the terminal triggers, through the second RAN node, path switching procedure of the PDU session. For a scenario in which, after the terminal accesses the second RAN node, the terminal no longer supports data transmission with the first RAN node, the SMF instructs the UPF to stop downlink data transmission of the PDU session. In this way, a scenario in which the UPF continuously attempts to reduce a data transmission rate to send the downlink data of the PDU session to the terminal, but the terminal cannot receive the downlink data, can be avoided, thereby helping improve communication performance.

In another scenario, after the terminal accesses the second RAN node, it can still support data transmission with the first RAN node. In other words, after the terminal accesses the second RAN node, it can still simultaneously connect to the first RAN node for data transmission.

In this scenario, the terminal, through the second RAN node, indicates to the second AMF that after the terminal accesses the second RAN node, it supports data transmission with the first RAN node. Further, the second AMF indicates to the SMF that after the terminal accesses the second RAN node, it supports data transmission with the first RAN node. In this way, the first AMF and the SMF temporarily do not release the original path, and the SMF does not perform the above S803. After the process of establishing a new path (a path passing through the second RAN node) described in S804 to S807 is completed, the first AMF and the SMF then release the original path.

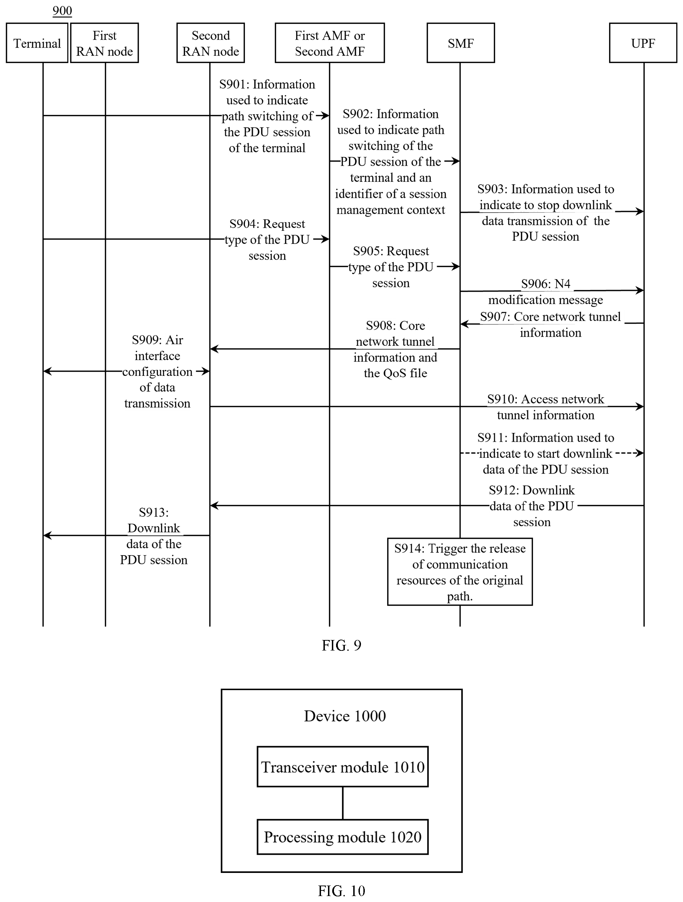

The following describes, with reference to FIG. 9, another specific process in which the SMF configures the UPF to stop downlink data transmission during path switching of a PDU session.

FIG. 9 is a schematic flowchart of still another communication method 900 according to an embodiment of this application. In the method 900, after the terminal accesses the second RAN node, the terminal does not support transmitting data with the first RAN node. A difference from the foregoing method 800 lies in that, in the method 900, the terminal sends, through an original path, information used to indicate path switching of the PDU session of the terminal.

Before the method 900, the foregoing method 600 or method 700 may be implemented. The method 900 includes S901 to S914, and specific steps are as follows:
S901: The terminal sends, to the first AMF, information used to indicate path switching of the PDU session of the terminal, corresponding to the fifth indication information in the foregoing. Correspondingly, the first AMF receives the information used to indicate the path for switching the PDU session of the terminal.

Specifically, the terminal sends, to the first AMF, through the first RAN node, the information used to indicate the path for switching the PDU session of the terminal.

In this step, because path switching procedure for the PDU session has not been triggered, the information used to indicate path switching of the PDU session of the terminal may be understood as information used to indicate to prepare path switching of the PDU session of the terminal or a path switching preparation indication.

From the above descriptions of method 600 or method 700, it can be known that in the process of establishing the PDU session, the terminal receives, from the SMF, information used to indicate that the PDU session has a transmission proxy function, or information used to indicate that the PDU session supports path switching. Based on this information, the terminal performs S901.

In this step, the terminal further sends the identifier of the PDU session to the first RAN node.

S902: The first AMF sends, to the SMF, information used to indicate path switching of the PDU session of the terminal, and an identifier of a session management context (SM Context ID). Correspondingly, the SMF receives the identifier of the session management context and the information used to indicate that path switching is performed for the PDU session of the terminal.

In this step, the identifier of the session management context is used by the first AMF and the SMF to identify the identifier of the PDU session of the terminal.

S903: The SMF sends, to the UPF, information used to indicate to stop downlink data transmission of the PDU session. Correspondingly, the UPF receives the information used to indicate to stop downlink data transmission of the PDU session.

Specifically, the UPF stops sending downlink data of the PDU session to the first RAN node through the first TCP connection.

Similar to the description in the method 800 above, the SMF may further indicate to the UPF the first duration used for buffering the downlink data of the PDU session. The UPF may further store the TCP parameters used when the transmission of the downlink data of the PDU session is stopped.

S904: The terminal sends the request type of the PDU session to the second AMF. The request type of the PDU session is a handover indication or an existing PDU session. Correspondingly, the second AMF receives the request type of the PDU session.

In this step, the terminal sends the request type of the PDU session to the second AMF through the second RAN node. For an introduction to the request type, refer to the description in S801 above. Details are not described herein again.

It should be understood that this step is a step of triggering path switching of the PDU session. Before this step, the UPF has stopped the transmission of the downlink data of the PDU session.

S905: The second AMF sends the request type of the PDU session to the SMF. Correspondingly, the SMF receives the request type of the PDU session.

S906: The SMF sends an N4 modification message to the UPF. Correspondingly, the UPF receives the N4 modification message.

S907: The UPF sends core network tunnel information to the SMF. The core network tunnel information includes the IP address and port number used by the UPF to receive uplink data. Correspondingly, the SMF receives the core network tunnel information.

S908: The SMF sends the core network tunnel information and the QoS file to the second RAN node through the second AMF. Correspondingly, the second RAN node receives the core network tunnel information and the QoS file.

S909: The second RAN node interacts with the terminal to configure an air interface for data transmission.

S910: The second RAN node sends access network tunnel information to the UPF through the second AMF and SMF. The access network tunnel information includes an IP address and a port number that the second RAN node uses to receive downlink data. Correspondingly, the UPF receives the access network tunnel information.

In this step, the access network tunnel information corresponds to the fourth indication information mentioned above.

Optionally, after S910, method 900 further includes S911: The SMF sends, to the UPF, information used to indicate to start downlink data transmission of the PDU session. This information corresponds to the fourth indication information mentioned above. In other words, after sending the access network tunnel information to the UPF, the SMF may further send, to the UPF, the information used to indicate to start downlink data transmission of the PDU session. Based on this information, the UPF starts sending downlink data of the PDU session to the second RAN node.

S912: The UPF sends, to the second RAN node, the downlink data of the PDU session. Correspondingly, the second RAN node receives the downlink data of the PDU session.

S913: The second RAN node sends the downlink data of the PDU session to the terminal. Correspondingly, the terminal receives the downlink data of the PDU session.

S914: The SMF triggers the release of the communication resources of the original path (i.e., the path passing through the first RAN node). The resources of the original path include the communication resources between the terminal and the first RAN node, and the communication resources between the first RAN node and the UPF.

For an introduction to this step, refer to the description of S811 above, and no further elaboration will be provided here.

In the embodiments of this application, before accessing the second RAN node, the terminal first indicates, through the original path, path switching of the PDU session of the terminal. After the SMF indicates to the UPF to stop the downlink data transmission of the PDU session, the terminal then triggers, through the new path, path switching procedure of the PDU session. Method 900 can avoid a loss of downlink data that has been sent by the UPF in a time period from when the terminal accesses the second RAN node to when the UPF receives the information used to indicate to stop the downlink data transmission of the PDU session. This can further improve service continuity.

It should be understood that the sequence numbers of the foregoing processes do not imply a specific execution order. The execution sequence of the processes should be determined based on the functions and internal logic of the processes, and should not constitute any limitation on the implementation process of the embodiments of this application.

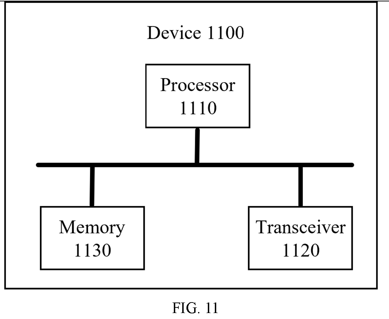

In the foregoing, with reference to FIG. 5 to FIG. 9, the communication method according to the embodiments of this application is described in detail. The following describes in detail, with reference to FIG. 10 and FIG. 11, the communication apparatus according to the embodiments of this application.

FIG. 10 is a schematic block diagram of a communication apparatus 1000 according to an embodiment of this application. The apparatus 1000 includes a transceiver module 1010. Optionally, the apparatus 1000 further includes a processing module 1020.

The processing module 1020 is configured to perform data processing. The transceiver module 1010 may implement a corresponding communication function. The transceiver module 1010 may also be referred to as a communication interface or a communication module.

Optionally, the apparatus 1000 may further include a storage module. The storage module may be configured to store data, and/or configured to store a computer program or instructions. The processing module 1020 may read the computer program/instructions and/or data in the storage module, so that the apparatus 1000 implements the foregoing method embodiments.

The apparatus 1000 may be configured to perform actions executed by the UPF, the SMF, or the terminal in the foregoing method embodiments. The apparatus 1000 may be the UPF, the SMF, or the terminal. Alternatively, the apparatus 1000 is a component (for example, a chip) configured in the UPF, the SMF, or the terminal. The processing module 1020 is configured to perform processing-related operations performed by the UPF, the SMF, or the terminal in the foregoing method embodiments. The transceiver module 1010 is configured to perform receiving and sending-related operations performed by the UPF, the SMF, or the terminal in the foregoing method embodiments.

Optionally, the transceiver module 1010 may include a sending module and a receiving module. The sending module is configured to perform the sending operation in the foregoing method embodiments. The receiving module is configured to perform the receiving operation in the foregoing method embodiments.

It should be noted that the apparatus 1000 may include a sending module, but does not include a receiving module. Alternatively, the apparatus 1000 may include a receiving module, but does not include a sending module. This may be specifically determined based on whether the foregoing scheme executed by the apparatus 1000 includes a sending action and a receiving action.

Optionally, the apparatus 1000 is configured to perform actions performed by the UPF, the SMF, or the terminal in the embodiments shown in FIG. 5 to FIG. 9. For details, refer to related descriptions in the embodiments shown in FIG. 5 to FIG. 9. Details are not described herein again.

In an embodiment, the apparatus 1000 is configured to perform the following solution:
The transceiver module 1010 is configured to receive first indication information from an SMF, where the first indication information is used to indicate to stop downlink data transmission of a first session of the terminal. The processing module 1020 is configured to stop, based on the first indication information, sending downlink data of the first session to the first RAN node, where the first RAN node is a RAN node that is configured to transmit data of the first session before the path switching of the first session.

Optionally, the transceiver module 1010 is configured to receive second indication information from an SMF, where the second indication information is used to indicate to provide a transmission proxy function for the first session, and the transmission proxy is a TCP connection transmission proxy, or the transmission proxy is a QUIC transmission proxy. The processing module 1020 is configured to provide the transmission proxy function for the first session based on the second indication information.

Optionally, the processing module 1020 is configured to stop sending downlink data of the first session to the first RAN node through a first communication connection, where the first communication connection is a TCP connection or a QUIC connection between the terminal and the UPF.

Optionally, the transceiver module 1010 is configured to receive downlink data that is of the first session and that is transmitted through a second communication connection. The processing module 1020 is configured to buffer the downlink data that is of the first session and that is transmitted on the second communication connection. The second communication connection is a TCP connection or a QUIC connection between the UPF and the server.

Optionally, the transceiver module 1010 is configured to receive third indication information from the SMF, where the third indication information is used to indicate a first duration, and the first duration is a duration for buffering the downlink data of the first session.

Optionally, the transceiver module 1010 is configured to receive fourth indication information from the SMF, where the fourth indication information is used to indicate to start downlink data transmission of the first session, and based on the fourth indication information, send the downlink data of the first session to the second RAN node through the first communication connection according to the stored communication connection parameters. The communication connection parameters are communication connection parameters used when sending the downlink data of the first session to the first RAN node through the first communication connection is stopped, and the second RAN node is a RAN node that is configured to transmit the data of the first session after the path switching of the first session.

In this embodiment, a person skilled in the art may understand that the apparatus 1000 may be specifically the UPF in the foregoing embodiments, or functions of the UPF in the foregoing embodiments may be integrated into the apparatus 1000. The foregoing functions may be implemented by hardware, or may be implemented by hardware executing corresponding software. The hardware or software includes one or more modules corresponding to the foregoing functions. The apparatus 1000 may be configured to perform the various procedures and/or steps corresponding to the UPF in the foregoing method embodiments.

In another possible embodiment, the apparatus 1000 is configured to perform the following solution:
The transceiver module 1010 is configured to: receive fifth indication information, where the fifth indication information is used to indicate path switching of the first session of a terminal; and when it is determined that the UPF provides a transmission proxy function for the first session, based on the fifth indication information, send the first indication information to the UPF. The first indication information is used to indicate to stop downlink data transmission of the first session, where the transmission proxy is a TCP connection transmission proxy, or the transmission proxy is a QUIC transmission proxy.

Optionally, the transceiver module 1010 is configured to: send third indication information to the UPF, where the third indication information is used to indicate a first duration, and the first duration is the duration for buffering downlink data of the first session.

Optionally, the transceiver module 1010 is configured to: receive the sixth indication information, where the sixth indication information is used to indicate that the terminal does not support data transmission with the first RAN node during path switching of the first session, and the first RAN node is a RAN node used to transmit data of the first session before path switching of the first session.

Optionally, the transceiver module 1010 is configured to: based on the fifth indication information and the sixth indication information, send the first indication information to the UPF.

Optionally, the transceiver module 1010 is configured to: send second indication information to the UPF, where the second indication information is used to indicate to provide the transmission proxy function for the first session.

Optionally, the transceiver module 1010 is configured to: based on the sixth indication information, send the second indication information to the UPF.

Optionally, the transceiver module 1010 is configured to receive seventh indication information, where the seventh indication information is used to indicate that the terminal supports path switching of the first session or the terminal supports path switching, and send the second indication information to the UPF based on the seventh indication information.

Optionally, the transceiver module 1010 is configured to receive eighth indication information, where the eighth indication information is used to indicate that service continuity of the first session during the path switching is supported, and send the second indication information to the UPF based on the eighth indication information.

Optionally, the transceiver module 1010 is configured to send ninth indication information to the terminal, where the ninth indication information is used to indicate that the first session has a transmission proxy function or the first session supports path switching.

Optionally, the transceiver module 1010 is configured to send fourth indication information to the UPF, where the fourth indication information is used to indicate to start downlink data transmission of the first session.

In this embodiment, a person skilled in the art may understand that the apparatus 1000 may be specifically the SMF in the foregoing embodiment, or a function of the SMF in the foregoing embodiment may be integrated into the apparatus 1000. The foregoing functions may be implemented through hardware, or may be implemented by executing corresponding software by hardware. The hardware or software includes one or more modules corresponding to the foregoing functions. The apparatus 1000 may be configured to perform procedures and/or steps corresponding to the SMF in the foregoing method embodiment.

In another possible embodiment, the apparatus 1000 is configured to perform the following solutions:
The transceiver module 1010 is configured to: receive ninth indication information, where the ninth indication information is used to indicate that the first session of the terminal has a transmission proxy function or that the first session supports path switching, and the transmission proxy is a TCP connection transmission proxy, or the transmission proxy is a QUIC transmission proxy; and based on the ninth indication information, send fifth indication information, where the fifth indication information is used to indicate path switching of the first session of the terminal.

Optionally, the transceiver module 1010 is configured to: send the fifth indication information through the first RAN node, where the first RAN node is a RAN node used to transmit data of the first session before path switching of the first session.

Optionally, the transceiver module 1010 is configured to: send the fifth indication information through the second RAN node, where the second RAN node is a RAN node used to transmit data of the first session after path switching of the first session.

Optionally, the transceiver module 1010 is configured to: send sixth indication information, where the sixth indication information is used to indicate that the terminal does not support data transmission with the first RAN node during path switching of the first session. The first RAN node is a RAN node used to transmit data of the first session before path switching of the first session.

Optionally, the transceiver module 1010 is configured to: send seventh indication information, where the seventh indication information is used to indicate that the terminal supports path switching of the first session or that the terminal supports path switching.

In this embodiment, a person skilled in the art may understand that the apparatus 1000 may be specifically the terminal in the foregoing embodiment, or the functions of the terminal in the foregoing embodiment may be integrated into the apparatus 1000. The foregoing functions may be implemented by hardware, or may be implemented by hardware executing corresponding software. The hardware or software includes one or more modules corresponding to the foregoing functions. The apparatus 1000 may be configured to perform various processes and/or steps corresponding to the terminal in the foregoing method embodiment.

It should be understood that the apparatus 1000 herein is embodied in a form of a functional module. The term "module" herein may refer to an application specific integrated circuit (application specific integrated circuit, ASIC), an electronic circuit, a processor (for example, a shared processor, a dedicated processor, or a group processor), and a memory, a merged logic circuit, and/or other appropriate components that support the described functions.

In an embodiment of this application, the apparatus 1000 may alternatively be a chip or a chip system, for example: a system on chip (system on chip, SoC). Correspondingly, the transceiver module may be a transceiver circuit of the chip. This is not limited herein.

FIG. 11 is a schematic block diagram of another communication apparatus 1100 according to an embodiment of this application. The apparatus 1100 includes a processor 1110, a transceiver 1120, and a memory 1130. The processor 1110, the transceiver 1120, and the memory 1130 communicate with each other through an internal connection path. The memory 1130 is configured to store instructions, and the processor 1110 is configured to execute the instructions stored in the memory 1130, to control the transceiver 1120 to send a signal and/or receive a signal.

It should be understood that the apparatus 1100 may be specifically the UPF, the SMF, or the terminal in the foregoing embodiment, or functions of the UPF, the SMF, or the terminal in the foregoing embodiment may be integrated into the apparatus 1100. The apparatus 1100 may be configured to perform steps and/or procedures corresponding to the UPF, the SMF, or the terminal in the foregoing method embodiments. Optionally, the memory 1130 may include a read-only memory and a random access memory, and provide instructions and data for the processor. A part of the memory may further include a nonvolatile random access memory. For example, the memory may further store information about a device type. The processor 1110 may be configured to execute the instruction stored in the memory. When the processor executes the instruction, the processor 1110 may perform the steps and/or procedures corresponding to the UPF, the SMF, or the terminal in the foregoing method embodiments.

It should be understood that, in this embodiment of this application, the processor may be a central processing unit (central processing unit, CPU), or the processor may be another general-purpose processor, a digital signal processor (digital signal processor, DSP), an ASIC, or a field programmable gate array (field programmable gate array, FPGA) or other programmable logic devices, discrete gates or transistor logic devices, discrete hardware components, and the like. The general-purpose processor may be a microprocessor, or the processor may be any conventional processor, or the like.

During the implementation process, the steps of the method described above can be completed by the integrated logic circuit of hardware in the processor or by instructions in the form of software. The steps of the method disclosed in the embodiments of this application can be directly reflected as being executed by a hardware processor, or by a combination of hardware and software modules in the processor. The software module may be located in a mature storage medium in this field, such as a random access memory, a flash memory, a read-only memory, a programmable read-only memory, an electrically erasable programmable memory, or a register. The processor executes the instructions in the memory, and completes the steps of the method in combination with its hardware. To avoid repetition, details are not described herein again.

A person of ordinary skill in the art may be aware that, in combination with the examples described in the embodiments disclosed in this application, the modules and algorithm steps of each example can be implemented by electronic hardware or a combination of computer software and electronic hardware. Whether these functions are performed by hardware or software depends on particular applications and design constraints of the technical solutions. Professional technicians can use different methods to implement the described functions for each specific application, but such implementation should not be considered as being beyond the scope of this application.

A person skilled in the art can clearly understand that, for the purpose of convenient and concise description, the specific working processes of the systems, apparatuses, and modules described above may refer to the corresponding processes in the method embodiments described above. These processes will not be further described herein.

In several embodiments provided in this application, it should be understood that the disclosed systems, apparatuses, and methods may be implemented in other ways. For example, the apparatus embodiments described above are merely illustrative. For example, the division of the modules is merely a logical function division, and may be divided in another way during actual implementation. For example, multiple modules or components may be combined or integrated into another system, or some features may be ignored or not performed. In addition, the mutual couplings or direct connections or communication connections that are shown or discussed between the modules may be implemented through some interfaces. The indirect couplings or communication connections between the apparatuses or modules may be implemented in an electrical, mechanical, or other form.

The modules described as separate components may or may not be physically separate, and the components displayed as modules may or may not be physical modules. That is, the modules may be located in one place, or may be distributed on multiple network modules. Some or all of the modules may be selected according to actual needs to implement the objectives of the solutions in the embodiments.

Additionally, in various embodiments of this application, the functional modules may be integrated into one processing module. Alternatively, each module may exist physically as a separate module. Furthermore, two or more modules may be integrated into one module.

If the functions are implemented in the form of software functional modules and sold or used as independent products, the functions may be stored in a computer-readable storage medium. Based on such an understanding, the technical solutions of this application, in essence, or the part contributing to the prior art, or some of the technical solutions may be implemented in the form of a software product. The computer software product is stored in a storage medium and includes several instructions for instructing a computer device (which may be a personal computer, a server, or a network device, etc.) to perform all or some of the steps of the methods described in the various embodiments of this application. The foregoing storage medium includes: a USB flash drive, a removable hard disk, a read-only memory (read-only memory, ROM), a random access memory (random access memory, RAM), a magnetic disk, an optical disc, or any other medium that can store program code.

The foregoing descriptions are merely specific implementations of this application. However, the protection scope of this application is not limited thereto. Any person skilled in the art of this technology, within the technical scope disclosed in this application, can easily conceive of variations or replacements, all of which should be covered within the protection scope of this application. Therefore, the protection scope of this application shall be determined according to the protection scope of the claims described above.

## Claims

1. A communication method, comprising:
receiving first indication information from a session management function network element, wherein the first indication information is used to indicate to stop downlink data transmission for a first session of a terminal; and
based on the first indication information, stopping sending the downlink data of the first session to a first radio access network node, wherein the first radio access network node is a radio access network node used to transmit data of the first session before the path switching of the first session.

2. The method according to claim 1, wherein the method further comprises:
receiving second indication information from the session management function network element, wherein the second indication information is used to indicate to provide a transmission proxy function for the first session, wherein the transmission proxy is a transmission control protocol connection transmission proxy, or the transmission proxy is a quick user datagram protocol internet connection transmission proxy; and
based on the second indication information, providing the transmission proxy function for the first session.

3. The method according to claim 2, wherein stopping sending the downlink data of the first session to the first radio access network node comprises:
stopping sending the downlink data of the first session to the first radio access network node through a first communication connection, wherein the first communication connection is a transmission control protocol connection or a quick user datagram protocol internet connection between the terminal and the user plane function network element.

4. The method according to claim 3, wherein after stopping sending downlink data of the first session to the first radio access network node through the first communication connection, the method further comprises:
receiving the downlink data of the first session transmitted through a second communication connection; and
buffering the downlink data of the first session transmitted through the second communication connection, wherein the second communication connection is a transmission control protocol connection or a quick user datagram protocol internet connection between the user plane function network element and the server.

5. The method according to any one of claims 1 to 4, wherein the method further comprises:
receiving third indication information from the session management function network element, wherein the third indication information is used to indicate a first duration, and the first duration is a duration for buffering downlink data of the first session.

6. The method according to claim 3 or 4, wherein after stopping sending downlink data of the first session to the first radio access network node through the first communication connection, the method further comprises:
receiving fourth indication information from the session management function network element, wherein the fourth indication information is used to indicate to start downlink data transmission of the first session; and
sending the downlink data of the first session to a second radio access network node based on the fourth indication information, and according to the stored communication connection parameters, through the first communication connection, wherein the stored communication connection parameters are communication connection parameters used when sending downlink data of the first session to the first radio access network node through the first communication connection is stopped, and the second radio access network node is a radio access network node configured to transmit data of the first session after the path switching of the first session.

7. A communication method, comprising:
receiving fifth indication information, wherein the fifth indication information is used to indicate path switching of a first session of a terminal; and
when determining that the user plane function network element provides a transmission proxy function for the first session, based on the fifth indication information, sending the first indication information to the user plane function network element, wherein the first indication information is used to indicate to stop downlink data transmission of the first session, and the transmission proxy is a transmission control protocol connection transmission proxy, or the transmission proxy is a quick user datagram protocol internet connection transmission proxy.

8. The method according to claim 7, wherein the method further comprises:
sending third indication information to the user plane function network element, wherein the third indication information is used to indicate a first duration, and the first duration is a duration for buffering downlink data of the first session.

9. The method according to claim 7 or 8, wherein the method further comprises:
receiving sixth indication information, wherein the sixth indication information is used to indicate that the terminal does not support data transmission with a first radio access network node during the path switching period of the first session, and the first radio access network node is a radio access network node used to transmit data of the first session before the path switching of the first session.

10. The method according to claim 9, wherein based on the fifth indication information, sending the first indication information to the user plane function network element comprises
based on the fifth indication information and the sixth indication information, sending the first indication information to the user plane function network element.

11. The method according to claim 9 or 10, wherein before receiving the fifth indication information, the method further comprises:
sending second indication information to the user plane function network element, wherein the second indication information is used to indicate to provide a transmission proxy function for the first session.

12. The method according to claim 11, wherein sending the second indication information to the user plane function network element comprises:
based on the sixth indication information, sending the second indication information to the user plane function network element.

13. The method according to claim 11, wherein before sending the second indication information to the user plane function network element, the method further comprises:
receiving seventh indication information, wherein the seventh indication information is used to indicate that the terminal supports path switching for the first session or that the terminal supports path switching; and
wherein sending the second indication information to the user plane function network element comprises:
based on the seventh indication information, sending the second indication information to the user plane function network element.

14. The method according to claim 11, wherein before sending the second indication information to the user plane function network element, the method further comprises:
receiving eighth indication information, wherein the eighth indication information is used to indicate support for service continuity of the first session during path switching; and
wherein sending the second indication information to the user plane function network element comprises:
based on the eighth indication information, sending the second indication information to the user plane function network element.

15. The method according to any one of claims 11 to 14, wherein after sending the second indication information to the user plane function network element, the method further comprises:
sending ninth indication information to the terminal, wherein the ninth indication information is used to indicate that the first session has the transmission proxy function or the first session supports path switching.

16. The method according to any one of claims 7 to 15, wherein after sending the first indication information to the user plane function network element, the method further comprises:
sending fourth indication information to the user plane function network element, wherein the fourth indication information is used to indicate to start downlink data transmission of the first session.

17. A communication method, comprising:
receiving ninth indication information, wherein the ninth indication information is used to indicate that the first session of the terminal has a transmission proxy function, or the first session supports path switching, wherein the transmission proxy is a transmission control protocol connection transmission proxy, or the transmission proxy is a quick user datagram protocol internet connection transmission proxy; and
based on the ninth indication information, sending fifth indication information, wherein the fifth indication information is used to indicate path switching of the first session of the terminal.

18. The method according to claim 17, wherein sending the fifth indication information comprises:
sending the fifth indication information through a first radio access network node, wherein the first radio access network node is a radio access network node used to transmit data of the first session before the path switching of the first session.

19. The method according to claim 17, wherein sending the fifth indication information comprises:
sending the fifth indication information through a second radio access network node, wherein the second radio access network node is a radio access network node used to transmit data of the first session after the path switching of the first session.

20. The method according to any one of claims 17 to 19, wherein the method further comprises:
sending sixth indication information, wherein the sixth indication information is used to indicate that the terminal does not support data transmission with a first radio access network node during the path switching of the first session, wherein the first radio access network node is a radio access network node used to transmit data of the first session before the path switching of the first session.

21. The method according to any one of claims 17 to 20, wherein before receiving the ninth indication information, the method further comprises:
sending seventh indication information, wherein the seventh indication information is used to indicate that the terminal supports path switching of the first session, or the terminal supports path switching.

22. A communication apparatus, comprising a module configured to implement the method according to any one of claims 1 to 6, or a module configured to implement the method according to any one of claims 7 to 16, or a module configured to implement the method according to any one of claims 17 to 21.

23. A communication apparatus, comprising a processor, wherein the processor is coupled to a memory, the memory is configured to store a program or instructions, and when the program or instructions are executed by the processor, the method according to any one of claims 1 to 6 is performed, or the method according to any one of claims 7 to 16 is performed, or the method according to any one of claims 17 to 21 is performed.

24. A computer-readable storage medium, wherein the computer-readable storage medium is configured to store a computer program, and when the computer program is run on a computer, the method according to any one of claims 1 to 6 is performed, or the method according to any one of claims 7 to 16 is performed, or the method according to any one of claims 17 to 21 is performed.

25. A computer program product, comprising: a computer program or instructions, wherein when the computer program or instructions are run, the method according to any one of claims 1 to 6 is performed, or, the method according to any one of claims 7 to 16 is performed, or the method according to any one of claims 17 to 21 is performed.
